# EUROPEAN PATENT SPECIFICATION

(11) **EP 0 778 176 B1**
(45) Date of publication and mention of the grant of the patent: **17.10.2001**
(21) Application number: 96117685.6
(22) Date of filing: 05.11.1996
(51) Int. Cl.: B60Q 1/42

(54) **Cancellation device for turn signal switch**
Rückstellungseinrichtung für Fahrtrichtungsanzeigeschalter
Dispositif de rappel pour interrupteur d'indicateur de direction

(30) Priority: 10.11.1995 JP 29301495
(43) Date of publication of application: 11.06.1997
(73) Proprietor: ALPS ELECTRIC CO., LTD., Ota-ku Tokyo 145 (JP)
(72) Inventor: Hayakawa, Hiroshi, Furukawa-shi, Miyagi-ken (JP)
(74) Representative: Klunker . Schmitt-Nilson . Hirsch

(56) References cited:
- EP-A- 0 675 022
- DE-B- 1 037 886

## Description

The present invention relates to a cancellation device for a turn signal switch, by which an operating lever is automatically returned or reset to a neutral position.

### Description of the Related Art

The turn signal switch of an automobile has a holding member in provided in an operating element, which is integrally formed with an operating lever, so as to hold the operating lever in each of the left- and right-direction indicating positions and the neutral position. Moreover, the turn signal switch further has cam portions and thus holds the operating lever by engaging the holding member with the cam portions. Furthermore, the turn signal switch has a cancellation device adapted so that when operating a steering wheel in a direction opposite to an indicated direction, a releasing member directly pushes the operating element to thereby return the operating lever to the neutral position.

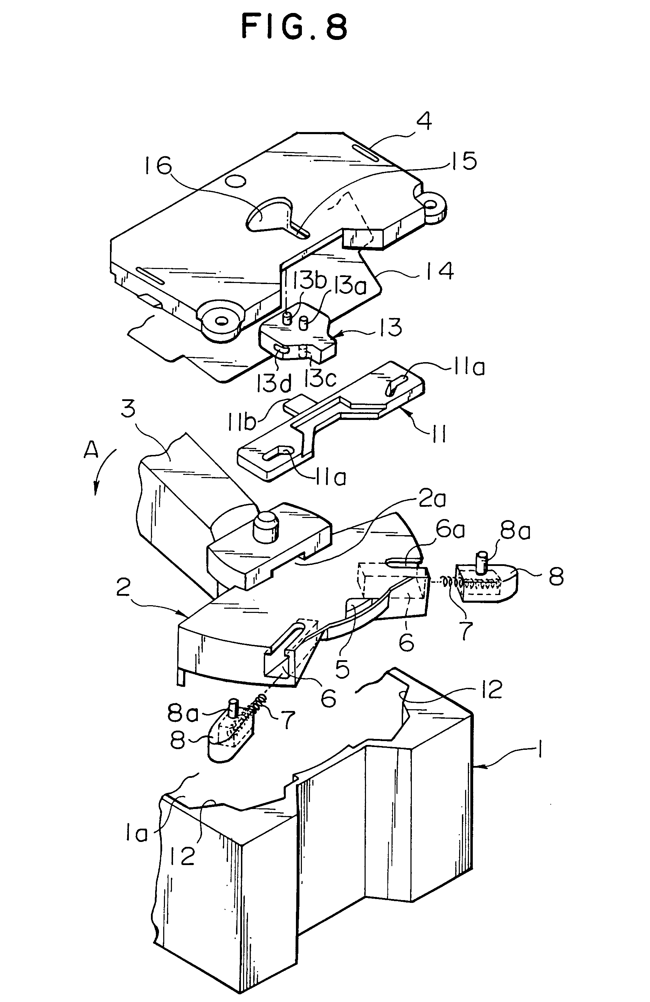

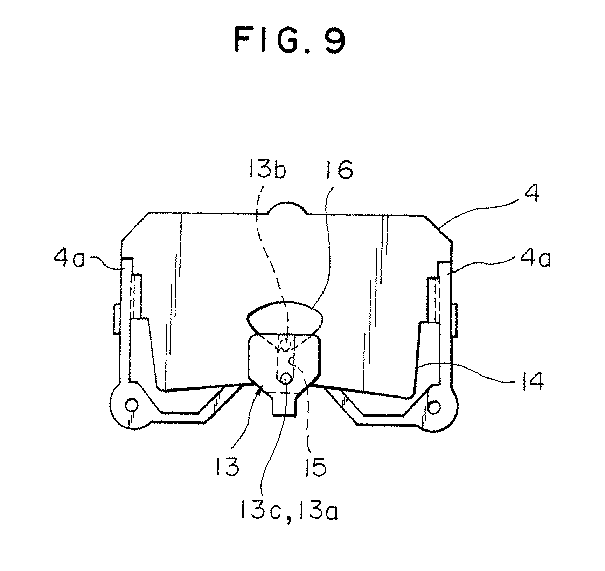

An example of such a conventional turn signal switch will be described hereinbelow with reference to FIGS. 8 and 9. FIG. 8 is an exploded perspective view of a primary part of the example of the conventional cancellation device. FIG. 9 is a rear view of this example, which illustrates the placement of a cover and a cam element thereof.

Reference numeral 1 designates a case attached to a steering cover (not shown). A switch driving component 2 is contained in a recess portion 1a thereof. An end of an operating lever 3 is connected to the switch driving component 2. The other end of the operating lever 3 projects outwardly from the case 1. The top of the recess portion 1a of the case 1, in which the switch driving element 2 or the like is stored, is covered with a cover 4. An engaging stop cam 5 having a triangular horizontal section is formed on the top surface of the switch driving component 2. Two blind holes 6 are formed in a peripheral surface portion of the switch driving component 2. Driving elements 8 are slidably fitted into these blind holes 6 in such a manner as to be pushed outwardly by springs 7 at all times, respectively. Pins 8a are provided on the top surfaces of these driving elements 8 in such a way as to be erected thereon. These pins 8a are adapted in such a manner as to move along guide grooves 6a formed on the upper portions of the blind holes 6, respectively. These guide grooves 6a extend nearly radially from the connection portion between the switch driving component 2 and the operating lever 3. A slider 11 having a pair of engagement holes 11a is put on the top surface of the switch driving component in conditions that a tongue piece 11b is fitted into the recess portion 2a of the switch driving component 2. Both of engagement holes 11a of the slider 11 are shaped nearly like a symbol "<" in such a way as to partly overlap with the guide groove 6a. A pair of cam portions 12 are formed in the recess portion 1a of the case 1 in such a manner that the tip end of each of the driving elements 8 slides thereon.

Reference numeral 13 denotes a cam element, a part of which engages with a cancellation projection (not shown) rotating together with a steering shaft (not shown) as a single piece. The cam element 13 has the top surface, on which a first projection 13a and a second projection 13b are provided and spaced out by a predetermined distance in the back-and-forth direction, and the bottom surface on which an engaging stop pin 13c is provided concentrically with the first projection 13a. A through hole 13d, which laterally penetrates through the cam element 13, is drilled in a side surface portion thereof. A wire form or spring 14 is inserted through this through hole 13d. This wire spring 14 is bent nearly like a symbol "]" and has a middle portion placed in the through hole 13d. Both end portions of the wire spring 14 are elastically engaged with and stopped (or caught) by left-side and right-side walls 4a which are formed in such a way as to protrude from the bottom surface of the cover 4. A linear guide hole 15 and a fan-shaped relief hole 16, which is formed in such a manner as to communicate with one end of this guide hole 15, are bored in a nearly central portion of the cover 4.

In the case of the conventional cancellation device constructed as above described, when the operating lever 3 is in the neutral position, the engaging stop pin 13c provided on the bottom surface of the cam element 13 is brought into abutting engagement with a vertex of the engaging stop cam 5, so that the cam element 13 retreats against the wire spring 14 and is located outside the pivotal-movement locus of a cancellation (or canceling) cam projection. Therefore, even if a steering wheel (not shown) is rotated under this condition, the cancellation cam projection is not brought into abutting engagement with the cam element 13. Thus, the switch driving component 2 and the operating lever 3 are maintained in the neutral position.

Next, when the operating lever 3 is pivotally moved from the neutral position in the direction of, for example, an arrow A, the driving element 8, which are shown as an upper one in FIG. 8, gets over the crest of the cam portion 12. Thus, the switch driving component 2 and the operating lever 3 are maintained in their resultant positions. Further, the switch driving component 2 causes, for instance, a turn signal switch for a left turn (not shown) to operate. Moreover, the rotation of the switch driving component 2 results in a change in the relative positional relation between the engaging stop cam 5 and the cam element 13. Thus, the cam element 13 is pushed by the wire spring 14, so that the engaging stop pin is moved from the vertex of the engaging stop cam to the inclined portion thereof and is then protruded to the front of the case 1. If the steering wheel is further turned in the direction corresponding to the left turn, the cancellation cam projection is attached to a protruded portion of the cam element 13 and then drives this protruded portion. In this case, the first projection 13a of the cam element 13 moves along the guide hole 15. Further, the second projection 13b thereof moves along an inclined face, which is shown as an upper inclined face in FIG. 8, of the relief hole 16. Thus, the cam element 13 retreats without being in abutting engagement with the slider 11. Consequently, the switch driving component 2 and the operating lever 3 are held in locked states thereof, respectively.

If the steering wheel is reversed under this condition, the cam element 13 having been in a protruded state is brought into abutting engagement with the cancellation cam projection during the return or reset operation. Thereby, the first projection 13a of the cam element 13 moves along the guide hole 15. Further, the second projection 13b thereof moves along another inclined face, which is shown as a lower inclined face in FIG. 8, of the relief hole 16. Thus, the cam element 13 is put into abutting engagement with the slider 11 and then causes the slider 11 to slide downwardly as viewed in this figure. When the slider 11 slides downwardly as viewed in the figure, the pin 8a of the driving element 8, which is shown as the upper one in this figure, moves by being in abutting engagement with the an end portion of the engagement hole 11a of the slider 11. Thus, this driving element 8 retreats in the blind hole 6 against the spring 7. Thereby, the tip end of the driving element 8 is detached from the cam portion 12, so that each of the switch driving component 2 and the operating lever 3 automatically returns to the neutral position thereof. Further, as a result of the return or reset of the switch driving component, the engaging stop pin 13c moves to the vertex of the engaging stop cam 5 again. Consequently, the engagement between the cam element 13 and the cancellation cam is canceled.

Meanwhile, if the steering wheel is reversed as above described during the operating lever 3 is maintained in a left-turn indicating state, the cam element 13 drives the slider 11 downwardly, as viewed in FIG. 8, through the cancellation cam projection. Further, the driving element 8, which has been located at an upper position as viewed in this figure, retreats into the blind hole 6. Hereat, the switch driving component 2 and the operating lever 3 are fixed by an operator. Thus, the first projection 13a and the second projection 13b of the cam element 13 retreat along the guide hole 15 and the inclined face, which is shown as the lower one, of the relief hole 16, respectively. Moreover, when the cancellation cam projection passes the cam element 13, the cam element 13 is returned to the protruded state by the wire spring 14. Moreover, the slider 11 and the driving component 8 are also reset by the spring 7. The locked state of each of the switch driving component 2 and the operating lever 3 is canceled.

In the case that a turn signal switch for a right turn is operated by pivotally moving the operating lever 3 in a direction reverse to the aforementioned direction, the driving element, which is shown as the lower one in this figure, gets over the cam portion 12 and is locked. Thereafter, an operation similar to the aforementioned operation is performed. Incidentally, in this case, at the time of the cancellation, the first projection 13a and the second projection 13b of the cam element 13 move along the guide hole 15 and the inclined face, which is shown as the upper one in this figure, of the relief hole 16, respectively. Further, the slider 11 moves upwardly as viewed in this figure.

Thus, in the case of the example of the conventional cancellation device, a force caused by the cam element 1 can be transmitted to the driving element 8 through the slider 11. Further, the engagement of the driving element 8 with the cam portion 12, as well as the disengagement of the driving element 8 from the cam portion 12, can be securely achieved. In the case that a canceling operation is performed with the operating lever fixed, a load exerted on the cancellation cam projection, the slider 11 or the cam element 13 can be absorbed owing to the contraction of the spring 7. Thereby, a reliable cancellation operation can be achieved. Moreover, in the case that the canceling operation is performed with the operating lever 3 fixed, the first projection 13a of the cam element 13 moves along the guide hole 15 and on the other hand, the second projection 13b thereof moves along one of the inclined faces of the relief hole 16. Thus, the amount of movement of the cam element 13 can be limited. Furthermore, a load exerted on the cancellation cam projection, the slider 11 or the cam element 13 can be reduced. As a consequence of the reduction in range of movement of the cam element 13, the inexpensive wire spring 14 can be used as means for pushing the cam element 13.

### Problems to be Solved by the Invention

The wire spring 14 is, however, inserted through the through hole 13d of the moving cam element 13. Thus, bending stress is locally applied to the wire spring 14 placed on the edge or brim of the through hole 13d with the movement of the cam element 13. Thus, a part of the wire spring 14, on which the stress is repeatedly exerted as a result of moving the cam element 13 a large number of times, is fatigued. Consequently, the resilient force of the wire spring 14 is lowered. When things come to the worst, there is a possibility that a rupture takes place at this fatigued part of the spring 14.

DE 10 37 886 B discloses a cancellation device for a turn signal switch comprising a switch driving component having a projection acting as a driving element cooperating with cam portions provided at an end face of an operating lever so as to lock the operating lever in first and second operating positions and a neutral position. A cam element provided with an elongated hole is supported on a pin standing upright from the switch driving component.

The cam element is driven by a projection provided on a steering shaft. Due to its support on said pin, the cam element is detachable from and pivotely moveable around said projection of the steering shaft. When the operating lever is turned to the left or to the right, the switch driving component is shifted towards the steering shaft and so is the cam element connected to the switch driving component by means of a spring, which abutts against a receiving portion of the cam element and pushes the cam element towards the projection of the steering shaft.

When the projection on the steering shaft pushes against the cam element, the cam element is rotated and urges the operating lever back into its neutral position.

It is, accordingly, an object of the present invention to provide a cancellation device for a turn signal switch, by which a spring member for elastically holding a cam element in two operating positions and a neutral position is bent without undue stress in response to an operation of a cam element and further, no stress is exerted locally thereon.

According to the present invention, this is achieved by the features of claim 1. Preferred embodiments are defined by the dependent claims.

According to a first specific embodiment, the present invention, there is provided a cancellation device for a turn signal switch, having a spring member by which a cam element can be smoothly operated without interfering an operation of the cam element.

In addition, there is a second preferred embodiment related to a cancellation device for a turn signal switch, by which a load imposed on a spring member can be regulated and by which a cam element can be prevented from becoming rickety.

There is also provided a cancellation device for a turn signal switch, which has a spring member whose pushing force exerted on a cam element is stabilized, according to a third preferred embodiment.

The spring member consists of the pair of coil portions and the pair of cam-element abutting portions. The pair of coil portions, which are held by the two protrusions provided in such a way as to protrude into the case. The pair of cam-element abutting portions are provided in such a fashion as to abut against the receiving portion of the first cam element. Thus, the spring member can bend in response to the movement and rotation of the cam member without undue stress. Namely, excessive stress caused by the spring member is not exerted thereon. Consequently, this means can stand long use.

In the first preferred embodiment of the present invention, each of end parts of the cam-element abutting portions of the spring member is rounded and elastically contacts the receiving portion of the cam element.

In that case, each of end parts of the cam-element abutting portions of the spring member is rounded. Thus, the abutting engagement between the receiving portion of the cam element and each of the end parts of the cam-element abutting portions of the spring member can be smoothly achieved by causing such a rounded end to slide on the receiving portion of the first cam element. Consequently, occurrences of malfunctions such as an un-smooth movement of the cam element and an un-cancelable condition of a turn signal switch can be prevented.

According to said second embodiment, the distance between the pair of coil portions of the spring member is set in such a manner as to be longer than that between the two protrusions provided in the case, wherein the pair of coil portions are fitted into a space between the two protrusions by bending the spring member.

A load imposed on the spring member can be regulated in terms of the amount of deflection of the spring member. Thus, the cam element can be securely prevented from becoming rickety.

In the third embodiment the cam-element abutting portions intersect with each other and elastically contact the receiving portion of the first cam element.

The distance from an end part of the cam-element abutting engagement portion to the coil portion acting as a fulcrum can be set in such a manner as to be long. Thus, although this means is compact, the pushing force of the spring member against the first cam element can be stabilized.

Hereinafter, the preferred embodiment of the present invention will be described in detail by referring to the accompanying drawings.

FIG. 1 is an exploded perspective view of a primary part of an embodiment of the present invention, taken from below.

FIG. 2 is a perspective view of this embodiment of the present invention, which illustrates how a first lever is incorporated into a case.

FIG. 3 is a perspective view of the case, which has been in the condition of FIG. 2, in which the first lever has been incorporated, for illustrating how a first cam element and a pushing spring are further incorporated thereinto.

FIG. 4 is a perspective view of the case, which has been in the condition of FIG. 3, for illustrating how a second cam element is further incorporated thereinto.

FIG. 5 is a perspective view of the case, which has been in the condition of FIG. 4, for illustrating how a cover is further incorporated thereinto.

FIG. 6 is a diagram for illustrating an operation of this embodiment of the present invention and is a plan view of this embodiment, which is in a neutral condition and is shown by removing the cover therefrom.

FIG. 7 is also a diagram for also illustrating an operation of this embodiment of the present invention and is a plan view of this embodiment that is in a condition, in which an operating lever is switched to the left-hand or right-hand sides and is shown by removing the cover therefrom.

FIG. 8 is an exploded perspective view of a primary part of an example of a conventional cancellation device.

FIG. 9 is a rear view of this example, which illustrates the placement of a cover and a cam element thereof.

A cancellation device for a turn signal switch, which is the embodiment of the present invention, is mainly consists of: a case 21 attached to a steering cover (not shown); first and second lever members 31 and 41 enclosed in this case 21; first and second cam elements 51 and 61 placed on the top surface of this first lever member 31; and a cover member 71 covering an upper opening of the case 21.

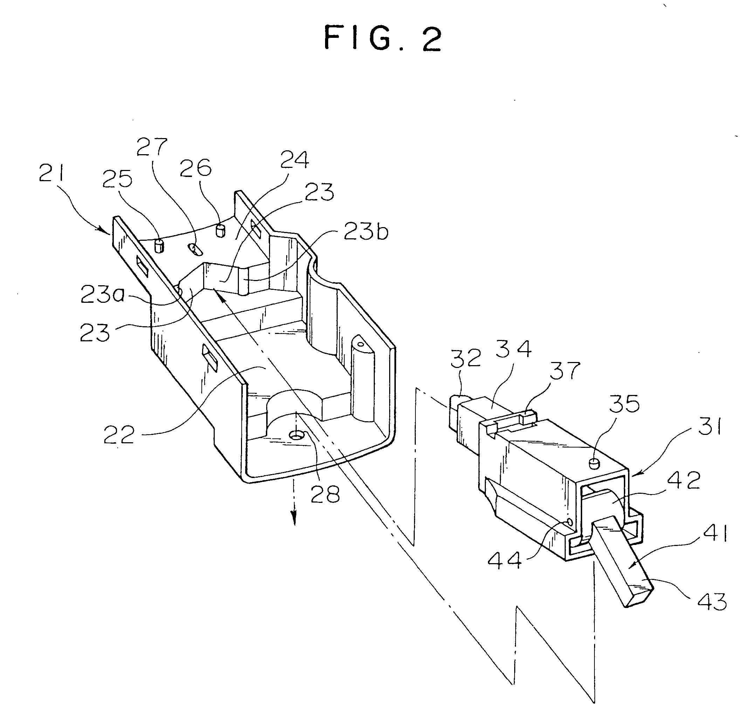

As shown in FIG. 2, the case 21 has: a recess portion 22 that accommodates the first lever member 31 and has an opened side surface and the other surface on which a pair of cam faces 23 and 23 are formed in such a way that the middle portion between the cam faces 23 is dented; and a stage portion 24 which is formed in such a manner that the position of the portion 24 is lower than the top end surface of the case 21. Two pins 25 and 26 are erected on the top surface of the stage portion 24 in such a way as to be spaced out by a predetermined distance. An elongated hole 27 is bored in the nearly middle portion between the two pins 25 and 26. Crest portions 23a and 23b are formed on end portions of the cam faces 23. An engagement hole 28 is drilled in the recess portion 22 formed on a side opposite to the side on which the cum faces 23 are formed.

The first lever member 31, one side of which is opened, is horizontally pivotally movably inserted in the recess portion 22. A driving-element supporting portion 34, into which the driving element 32 is inserted, is formed on a side portion of this first lever member 31, which is opposite to the opened side portion thereof. This driving element 32 is slidably inserted in the driving-element supporting portion 34 through a spring 33. The tip end of the driving element 32 is pressed by the spring 33 against the cam face 23 at all times. Engagement pins 25 and 26 are planted on the top surface and the bottom surface of the opened side of the first lever member 31, respectively. Further, an engaging stop groove 37 is formed in a part of the top surface of the first lever member 31, which is formed at the side thereof corresponding to the driving-element supporting portion 34. An engaging stop hole 38 is drilled in each of left and right side surface portions at the opening-side of the first lever member 31.

The second lever member 41 has a head portion 42, which is provided on an end of a base portion 43 in such a way as to be orthogonal to the end thereof, and is shaped nearly like a letter "T". Further, engaging stop pins 44 are erected on both of ends of the head portion 42, respectively. These engaging stop pins 44 are pivotally movably inserted in the engaging stop holes 38 drilled in the first lever member 31, respectively. The base portion 43 is inserted in the opened end portion of an operating lever 45 and is then fixed therein with a spring pin 46.

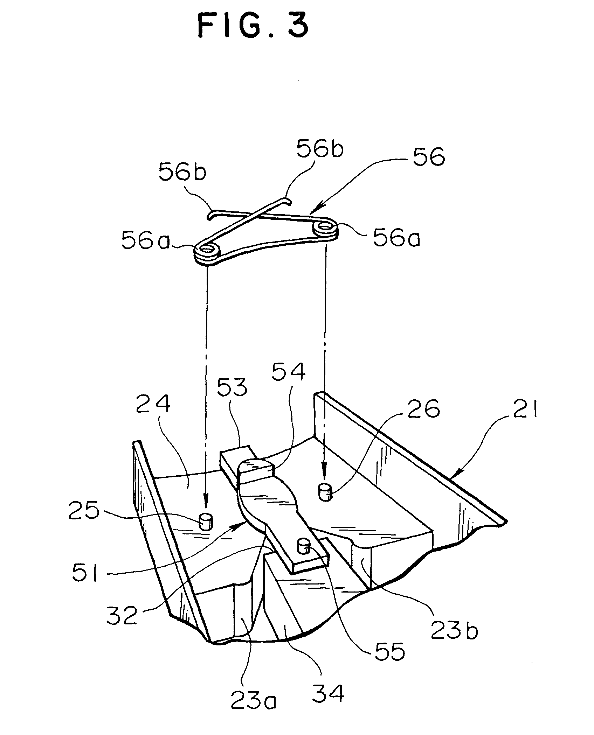

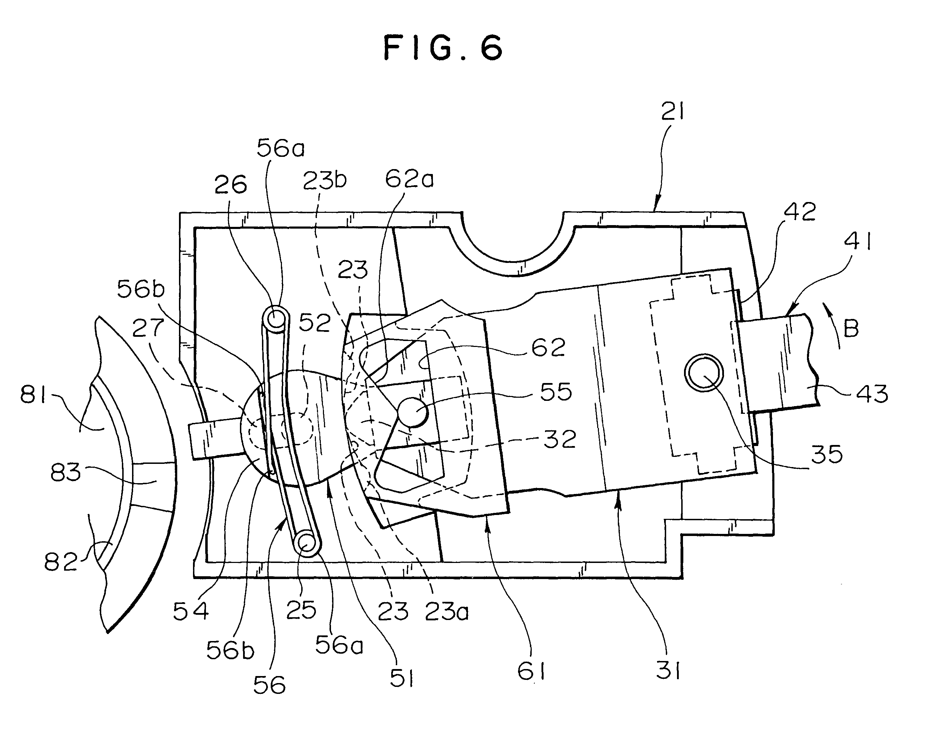

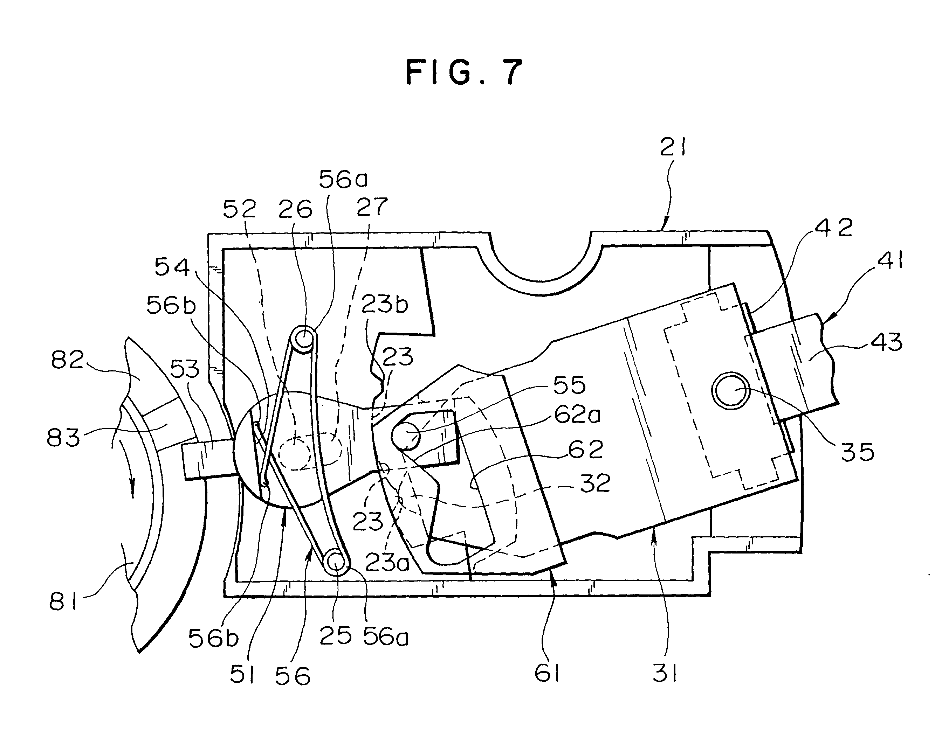

The first cam element 51 is placed on the stage portion 24 in such a way that an engaging stop pin 52 erected on the bottom surface of the first cam element 51 is loosely fitted into the elongated hole 27 which is drilled in the top surface part of the stage portion 24. Hereat, an engagement projection 53 is formed on the cam element 51 in such a manner as to protrude from the case 21. As shown in FIGS. 6 and 7, this engagement projection 53 engages with a projection 83 provided on a cancellation cam 82 rotating together with a steering shaft 81 as a single piece. A receiving portion 54 is formed on a part, which is at the side of the engagement projection 53, of the top surface of the first cam element 51 in such a fashion as to be erected thereon. An engagement pin 55 is erected on a part, which is opposite to the part corresponding to the projection 53, of the top surface of the first cam element 51. As illustrated in FIG. 3, the first cam element 51 is put on the stage portion 24 of the case 21 in such a way that an engaging stop pin 52 is loosely fitted into the elongated hole 27. Thereafter, a spring member 56 is attached thereto in such a manner that the position of the first cam element 51 is restricted on the stage portion 24. This spring member 56 has a pair of coil portions 56 formed in such a manner as to be spaced by a distance which is slightly longer than the distance between the two pins 25 and 26. Both tip end portions 56b thereof are provided in such a fashion as to inwardly extend from the coil portions 56a and intersect with each other. Further, both of the tip end portions 56b are rounded. Parts of the spring member 56 between the pair of coil portions 56a are bent in the directions of both end portions 56b thereof by inserting a pair of col portions 56a onto the two pins 25 and 26 in such a way that the end portions 56b of this spring member 56 are in abutting engagement with the receiving portion 54. Moreover, the spring member 56 supports and pushes the first cam element 51 outwardly toward the exterior of the case 21.

Incidentally, a projection (not shown) may be formed in the vicinity of the middle portion between both of the coil portions 56a so as to prevent the bent spring member 56 from being reversed.

A cam hole 62 having a crest-like cam side is drilled in the top surface portion of the second cam element 61. A pair of supporting projections 64 for supporting both ends of a coil-like action spring 63 are provided on the back or rear surface of the second cam element 61, which is opposite to the cam side 62a, in such a manner as to protrude therefrom. The supporting projections 64 of this second cam element 61 are inserted into the engaging stop groove 37 of the first lever member 31 so that both ends of the action spring 63 are kept supported by these projections. The engaging stop pin 52 of the first cam element 51 is inserted into the cam hole 62 from below.

A cover member 71 covers the upper opening of the case 21. Moreover, an engaging stop pin 35 of the first lever member 31 is inserted into an engaging stop hole 72 drilled in the top surface portion of the cover member 71. Thereby, the pivotal movement of the first lever member 31 about the engaging stop pins 35 and 36 is securely achieved.

Next, an operation of the aforementioned embodiment of the present invention will be described hereinbelow.

In the case of the aforementioned cancellation device for a turn signal switch, when the operating lever 45 is in the neutral position as illustrated in FIG. 6, the engagement pin 55 of the first cam element 51 is in abutting engagement with the vertex of the cam side 62a corresponding to the cam hole 62 of the second cam element 61. Thus, the spring member 56 retreats by a distance to which the range of movement of the engaging pin 52 is limited by the spring member 56 in the elongated hole 27. The first cam element 51 is placed outside the pivotal-movement locus of the projection 83 of the cancellation cam 82 rotating together with the steering shaft 81 as a single piece. Therefore, even if the steering wheel (not shown) is turned under such a condition, the projection 83 of the cancellation cam 82 is not brought into abutting engagement with the engagement projection 53 of the first cam element 51, so that each of the first and second lever members 31 and 41 and the operating lever 45 is maintained in the neutral position.

Subsequently, when the operating lever 45 is pivotally moved from this neutral position in the direction of an arrow B, the first lever member 31 is also pivotally moved counterclockwise about the engaging stop pin 35 as illustrated in FIG. 7. Thereby, the driving element 32 provided at the end of the first lever member 31 gets over the crest 23a of the cam face 23, which is shown as a lower one in this figure, and is then stopped thereon. Therefore, in addition to the first lever member 31 and the operating lever 45, the second cam element 61 is maintained in the corresponding position. The first lever member 31 causes, for example, a turn signal switch for a left turn (not shown) to operate. Further, as a result of the rotation of the second cam element 61, the engagement pin 55 of the first cam element 51 moves along the upper inclined surface of the cam side 62a of the second cam element 61 as viewed in this figure. This movement is performed without fail because of the fact that both of the end portions 56b of the spring member 56 pushes the receiving portion 54 of the first cam element 51 elastically and leftwardly as viewed in this figure. As a consequence of this movement of the first cam element 51, the engaging stop pin 52 of the first cam element 51 is brought into abutting engagement with the opposite side (namely, the left end thereof illustrated in FIG. 7) of the elongated hole 27. Thus, the movement of the first cam element 51 is stopped. As illustrated in FIG. 7, under such a condition, the engagement projection 53 of the first cam element 51 advances into the pivotal-movement locus of the projection 83 of the cancellation cam 82.

The condition of FIG. 7 is maintained owing to the fact that the driving element 32 is pushed by the spring 33 at a place where the driving element 32 reaches after getting over the crest 23a of the cam face 23.

Incidentally, if the steering wheel is further turned in the direction corresponding to the left turn under the condition of FIG. 7, the projection 83 of the cancellation cam 82 engages the engagement projection 53 of the first cam element 51. Thus, the first cam element 51 is rotated about the engaging stop pin 52. A force due to the pivotal movement of the engagement pin 55 causes the engagement pin 55 to merely slide on the cam side 62a. Even if this force is transmitted, the transmitted force is weak and causes the engaging stop pin 35 to move about the engagement pin 35 pivotally and counterclockwise as illustrated in FIG. 7. If a force is exerted on the operating lever 45 in this direction, the condition of FIG. 7 is maintained. Further, the engagement projection 53 is inclined by turning the first cam element 51, so that the engagement projection 53 is not an obstacle to the rotation of the projection 83 of the cancellation cam 82.

Subsequently, when the steering wheel shaft is turned in the opposite direction (namely, the direction of an arrow as shown in FIG. 7) by reversing the steering wheel, the projection 83 of the cancellation cam 82 knocks against the engagement projection 83 of the cancellation cam 82. Then, when the engagement projection 53 is pushed, the first cam element 51 moves pivotally about the engaging stop pin 52 like a lever. The engagement pin 55 corresponding to the other end is in abutting engagement with and pushes a side end portion of the cam hole 62 (namely, an upper end portion thereof as viewed in this figure). Thus, the second cam element 61 and the first lever member 31 are pivotally moved clockwise about the engaging stop pin 35. When this second cam element 61 and the first lever member 31 are pivotally moved, the driving element 32 is made to get over the crest portion 23a of the driving element 32. Then, the driving element 32 is reset to the neutral position between the two cam faces 23 by the resilient force of the spring member 56. Moreover, each of the first lever member 31 and the operating lever 56 returns to the neutral position of FIG. 6. As above stated, under the condition of FIG. 6, the engagement pin 55 of the first cam element 51 is moved to the vertex of the cam side 62a against the resilient force of the spring member 56. Furthermore, the engagement projection 53 of the first cam element 51 retreats out of the aforementioned pivotal-movement locus. When being in the neutral position of FIG. 6, the projection 83 of the cancellation cam 82 is not in abutting engagement with the engagement projection 53 of the first cam element 51 at all.

In the case of the aforesaid embodiment configured in this way, when compressed or reset by the pivotal movement of the operating lever 45 or the abutting engagement between the engagement projection 53 of the first cam element 51 and the projection 83 of the cancellation cam 82, both of the end portions 56 of the spring member 56 are brought into abutting engagement with the receiving portion 54 of the first cam element 51. However, because both of the end portions 56b of the spring member 56 is bent, the abutting engagement between the receiving portion of the cam element and each of the end parts of the cam-element abutting portions of the spring member is smoothly achieved. Thus, the spring member 56 can bend in response to the movement and rotation of the second cam element 61 without undue stress. Namely, excessive stress is not exerted on the spring member 56 at all. Consequently, this means can stand long use. Consequently, occurrences of malfunctions such as an un-smooth movement of the cam element and an un-cancelable condition of a turn signal switch can be prevented.

Further, the distance between the pair of coil portions 56a, 56a of the spring member 56 is set in such a manner as to be longer than that between the two protrusions 25 and 26 provided in the case 21, wherein the pair of coil portions are fitted into a space between the two protrusions 25 and 26 by bending the spring member 56. Thus, a load imposed on the spring member 56 can be regulated in terms of the amount of deflection of the spring member 56. Consequently, the second cam element 61 can be securely prevented from becoming rickety. Moreover, the pushing force due to the spring member 56 can be stabilized. Alternatively, the load imposed on the spring member 56 can be regulated by changing the number of turns of each of the pair of coil portions 56a. Similarly as in the case described hereinabove, the second cam element 61 can be securely prevented from becoming rickety. Moreover, the pushing force due to the spring member 56 can be stabilized.

Furthermore, the end portions 56b and 56b, which serve as the cam-element abutting portions of the spring member 56, intersect with each other and elastically contact the receiving portion 54 of the first cam element 51. Thus, the distance from each of the end portions 56b and 56b, which elastically contact with the receiving portion 54 of the first cam element 51, to a corresponding one of the coil portions 56a and 56a, which act as fulcrums, can be set in such a manner as to be long. Thus, although this means is compact, the pushing force of the spring member 56 against the first cam element 51 can be stabilized.

In accordance with the present invention recited in claim 3, a load imposed on the spring member can be regulated in terms of the amount of deflection of the spring member. Thus, the cam element can be securely prevented from becoming rickety.

In accordance with the present invention recited in claim 4, the distance from an end part of the cam-element abutting engagement portion to the coil portion acting as a fulcrum can be set in such a manner as to be long. Thus, although this means is compact, the pushing force of the spring member against the first cam element can be stabilized.

### Brief Description of the Drawings

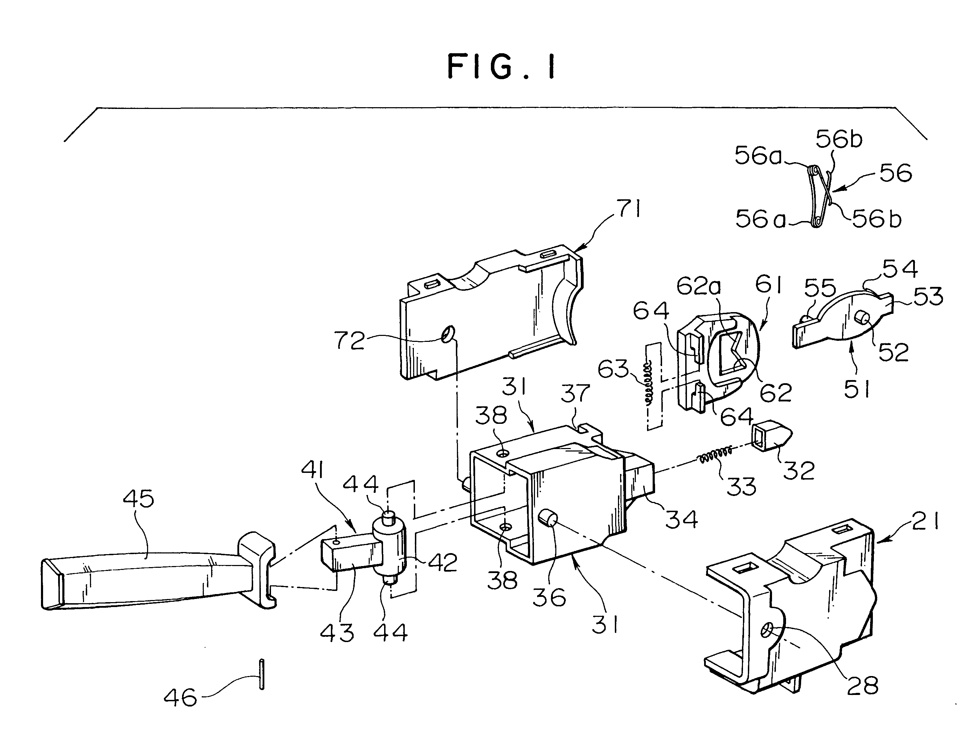

FIG. 1 is an exploded perspective view of a primary part of an embodiment of the present invention, taken from below.

FIG. 2 is a perspective view of this embodiment of the present invention, which illustrates how a first lever is incorporated into a case.

FIG. 3 is a perspective view of the case of FIG. 2, in which the first lever has been incorporated, for illustrating how a first cam element and a pushing spring are further incorporated thereinto.

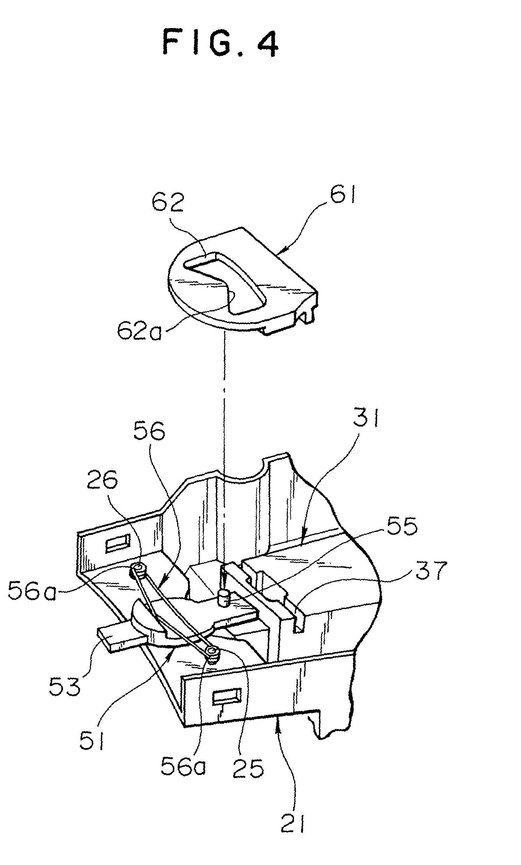

FIG. 4 is a perspective view of the case of FIG. 3, in which the first cam element and the pushing spring have been incorporated, for illustrating how a second cam element is further incorporated thereinto.

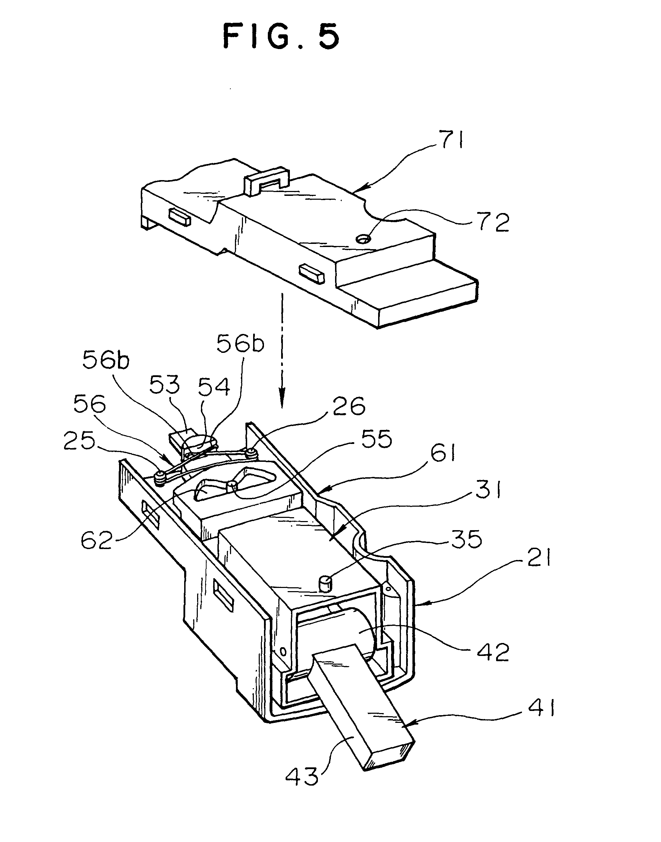

FIG. 5 is a perspective view of the case of FIG. 4, in which the second cam element has been incorporated, for illustrating how a cover is further incorporated thereinto.

FIG. 6 is a plan view of this embodiment of the present invention, which is in a neutral condition and is shown by removing the cover therefrom, for illustrating an operation thereof.

FIG. 7 is a plan view of this embodiment of the present invention, which is in a condition, in which an operating lever is switched to the left-hand or right-hand sides and is shown by removing the cover therefrom, for also illustrating an operation thereof.

FIG. 8 is an exploded perspective view of a primary part of an example of a conventional cancellation device.

FIG. 9 is a rear view of this example, which illustrates the placement of a cover and a cam element thereof.

### Reference Numerals

- 21: a case
- 22: a recess portion
- 23: a cam surface (a cam portion)
- 25, 26: pins
- 27: an elongated hole
- 31: a first lever member (a switch driving component)
- 32: a driving element
- 33: a spring
- 45: an operating lever
- 51: a first cam element
- 53: an engagement projection
- 54: a receiving portion
- 55: an engagement pin
- 56: a spring member
- 56a: a coil portion
- 56b: an end portion (a cam-element abutting portion)
- 61: a second cam element
- 62: a cam hole
- 62a: a cam side
- 81: a steering shaft
- 82: a cancellation cam
- 83: a projection

## Claims

1. A cancellation device for a turn signal switch, comprising:
a switch driving component (31) operative to link with an operating lever (45) and to pivotally move;
a driving element (32) provided in the switch driving component (31) through a spring (33);
cam portions (23,23a,23b) adapted to cooperate with the driving element (32) in locking the operating lever (45) in first and second operation positions and a neutral position, respectively;
a first cam element (51) which is driven by a projection (83) provided on a steering shaft (81) and is supported in such a manner as to be detachable from and pivotally movable around the projection (83) of the steering shaft (81);
a spring member (56) operative to abut against a receiving portion (54) of the first cam element (51) and to push the cam element (51) toward the projection (83) of the steering shaft (81);
a second cam element (61) which is provided in the switch driving component (31) and causes the first cam element (51) to retreat out of a movement locus of the projection (83) of the steering shaft (81) when the lever (45) is in the neutral position, and causes the first cam element (51) to advance into the movement locus of the projection (83) of the steering shaft (81) in the first and second operation positions; and
a case (21) in which the switch driving component (31), the driving element (32), the first and second cam elements (51,61), the cam portions (23,23a,23b) and the spring member (56) are contained,
wherein the spring member (56) is formed by bending an elastic wire and has a pair of coil portions (56a), which are held by two protrusions (25,26) provided in such a way as to protrude into the case (21), and a pair of cam-element abutting portions (56B) which are provided in such a fashion as to extend from the coil portions (56a), respectively, and abut against and push the receiving portion (54) of the first cam element (51).

2. The cancellation device for a turn signal switch according to claim 1, wherein each of end parts of the cam-element abutting portions (56b) of the spring member (56) is rounded and elastically contacts the receiving portion (54) of the first cam element (51).

3. The cancellation device for a turn signal switch according to claim 1 or 2, wherein a distance between the pair of coil portions (56a) of the spring member (56) is set in such a manner as to be longer than that between the two protrusions (25,26) provided in the case (21), wherein the pair of coil portions (56a) are fitted into a space between the two protrusions (25,26) by bending the spring member.

4. The cancellation device for a turn signal switch according to any one of claims 1 to 3, wherein the cam-element abutting portions (56b) intersect with each other and elastically contact the receiving portion (54) of the first cam element (51).

## Patentansprüche

1. Rückstellungseinrichtung für einen Fahrtrichtungsanzeigeschalter, mit
einer Schalter-Antriebskomponente (31), die zur betriebsmäßigen Verbindung mit einem Betätigungshebel (45) sowie zur Ausführung einer Schwenkbewegung ausgebildet ist;
einem Antriebselement (32), das unter Zwischenanordnung einer Feder (33) in der Schalter-Antriebskomponente (31) vorgesehen ist;
Steuerflächenbereichen (23, 23a, 23b), die dazu ausgebildet sind, mit dem Antriebselement (32) beim Verriegeln des Betätigungshebels (45) in einer ersten und einer zweiten Betriebsstellung bzw. in einer Neutralstellung zusammenzuwirken;
einem ersten Steuerflächenelement (51), das durch einen an einer Lenkwelle (81) vorgesehenen Vorsprung (83) antriebsmäßig betätigt wird und derart gelagert ist, dass es von dem Vorsprung (83) der Lenkwelle (81) lösbar ist und um diesen schwenkbar beweglich ist;
einem Federelement (56), das zum Anliegen an einem Aufnahmebereich (54) des ersten Steuerflächenelements (51) sowie zum Drücken des Steuerflächenelements (51) in Richtung auf den Vorsprung (83) der Lenkwelle (81) ausgebildet ist;
einem zweiten Steuerflächenelement (61), das in der Schalter-Antriebskomponente (31) vorgesehen ist und das erste Steuerflächenelement (51) dazu veranlasst, sich aus dem Bereich einer Ortskurve des Vorsprungs (83) der Lenkwelle (81) zurück zu ziehen, wenn sich der Hebel (45) in der Neutralstellung befindet, sowie das erste Steuerflächenelement (51) dazu veranlasst, sich bei Vorliegen der ersten und der zweiten Betriebsstellung in den Bereich der Ortskurve des Vorsprungs (83) der Lenkwelle (81) hinein zu bewegen; und mit
einem Gehäuse (21), in dem die Schalter-Antriebskomponente (31), das Antriebselement (32), das erste und das zweite Steuerflächenelement (51, 61), die Steuerflächenbereiche (23, 23a, 23b) und das Federelement (56) enthalten sind,
wobei das Federelement (56) durch Biegen eines elastischen Drahts gebildet ist und ein Paar Wickelbereiche (56a) aufweist, die von zwei Vorsprüngen (25, 26) gehalten sind, die derart vorgesehen sind, dass sie in das Gehäuse (21) hinein ragen, sowie ein Paar Steuerflächenelement-Anlagebereiche (56b) aufweist, die derart vorgesehen sind, dass sie sich jeweils von den Wickelbereichen (56) weg erstrecken und an dem Aufnahmebereich (54) des ersten Steuerflächenelements (51) anliegen sowie dieses mit Druck beaufschlagen.

2. Rückstellungseinrichtung für einen Fahrtrichtungsanzeigeschalter nach Anspruch 1,
wobei jeder der Endteile der Steuerflächenelement-Anlagebereiche (56b) des Federelements (56) gekrümmt ist und mit dem Aufnahmebereich (54) des ersten Steuerflächenelements (51) in elastischer Berührung steht.

3. Rückstellungseinrichtung für einen Fahrtrichtungsanzeigeschalter nach Anspruch 1 oder 2,
wobei eine Distanz zwischen dem Paar der Wickelbereich (56a) des Federelements (56) derart gewählt ist, dass sie länger ist als die Distanz zwischen den beiden Vorsprüngen (25, 26), die in dem Gehäuse (21) vorgesehen sind, wobei das Paar der Wickelbereiche (56a) durch Biegen des Federelements in einen Raum zwischen den beiden Vorsprüngen (25, 26) gepasst ist.

4. Rückstellungseinrichtung für einen Fahrtrichtungsanzeigeschalter nach einem der Ansprüche 1 bis 3,
wobei die Steuerflächenelement-Anlagebereiche (56b) einander schneiden und mit dem Aufnahmebereich (54) des ersten Steuerflächenelements (51) in elastischer Berührung stehen.

## Revendications

1. Dispositif de rappel pour commutateur d'indicateur de direction comportant :
un composant d'entraînement de commutateur (31) apte à se lier avec un levier d'actionnement (45) et à pivoter,
un organe d'entraînement (32) disposé dans le composant d'entraînement de commutateur (31) par l'intermédiaire d'un ressort (33),
des parties formant came (23, 23a, 23b) pouvant coopérer avec l'organe d'entraînement (32) pour verrouiller le levier d'actionnement (45) dans une première et une seconde position de fonctionnement et une position neutre, respectivement ;
un premier élément de came (51) est entraîné par une saillie (83) disposée sur un arbre de direction (81) et est supporté de façon à pouvoir être séparé de la projection (83) de l'arbre de direction (81) et à pouvoir pivoter autour de celle-ci;
un ressort (56) apte à s'appuyer contre une partie réceptrice (54) du premier élément de came (51), et à pousser l'élément de came (51) vers la saillie (83) de l'arbre de direction (81);
un second élément de came (61) qui est disposé dans le composant d'entraînement de commutateur (31) et fait se retirer le premier élément de came (51) hors d'une trajectoire de déplacement de la saillie (83) de l'arbre de direction (81) lorsque le levier (45) est en position neutre et fait avancer le premier élément de came (51) dans la trajectoire de déplacement de la saillie (83) de l'arbre de direction (81) dans la première et la seconde positions de fonctionnement et un boîtier (21) dans lequel sont contenus le composant d'entraînement de commutateur (31), l'organe d'entraînement (32), le premier et le second éléments de came (51, 61), les parties formant came (23, 23a, 23b) et le ressort (56), le ressort (56) étant formé en courbant un fil élastique, et ayant une paire de parties d'enroulement (56a) maintenues par deux tétons (25, 26) prévus de façon à faire saillie vers l'intérieur du boîtier (21) et une paire de parties d'appui (56b) pour élément de came réalisées de manière à s'étendre depuis les parties d'enroulement (56a), respectivement, et à s'appuyer contre la partie de réception (54) du premier élément de came (51) et à pousser celle-ci.

2. Dispositif de rappel pour commutateur d'indicateur de direction selon la revendication 1, dans lequel chacune des zones d'extrémités des parties d'appui (56b) pour éléments de came du ressort (56) est incurvée et contacte élastiquement la partie réceptrice (54) du premier élément de came (51).

3. Dispositif de rappel pour commutateur d'indicateur de direction selon la revendication 1 ou 2, dans lequel un écart entre les deux parties d'enroulement (56a) du ressort (56) est réglé de manière à être plus longue que celle entre les deux tétons (25, 26) prévus dans le boîtier (21), la paire de parties d'enroulement (56a) étant disposée dans un intervalle entre les deux tétons (25, 26) en tordant le ressort.

4. Dispositif de rappel pour commutateur d'indicateur de direction selon l'une quelconque des revendications 1 à 3, dans lequel les parties d'appui (56b) pour éléments de came s'entrecroisent et contactent élastiquement la partie réceptrice (54) du premier élément de came (51).
